# EUROPÄISCHE PATENTSCHRIFT

(11) **EP 3 966 643 B1**
(45) Veröffentlichungstag und Bekanntmachung des Hinweises auf die Patenterteilung: **28.06.2023**
(21) Anmeldenummer: 20758095.2
(22) Anmeldetag: 08.05.2020
(51) Int. Cl.: G05B 19/4093

(54) **VERFAHREN UND SYSTEM ZUM OPTIMIEREN DER ZUSAMMENSETZUNG VON BIEGEWERKZEUGEN EINER BIEGEMASCHINE**
METHOD AND SYSTEM FOR OPTIMISING THE CONFIGURATION OF BENDING TOOLS OF A BENDING MACHINE
PROCÉDÉ ET SYSTÈME D'OPTIMISATION DE LA COMPOSITION D'OUTILS DE PLIAGE D'UNE MACHINE DE PLIAGE

(30) Priorität: 10.05.2019 AT 504222019
(43) Veröffentlichungstag der Anmeldung: 16.03.2022
(73) Patentinhaber: TRUMPF Maschinen Austria GmbH & Co. KG., 4061 Pasching (AT)
(72) Erfinder: HASELBÖCK, Alfred, 4150 Rohrbach (AT); SACHSENHOFER, Harald, 4112 Sankt Gotthard (AT)
(74) Vertreter: Burger, Hannes
(86) Internationale Anmeldenummer: PCT/AT2020/060187
(87) Internationale Veröffentlichungsnummer: WO 2020/227743

(56) Entgegenhaltungen:
- EP-A1- 1 925 374
- GUPTA S K ET AL: "Automated Process Planning for Sheet Metal Bending Operations", JOURNAL OF MANUFACTURING SYSTEMS, SOCIETY OF MANUFACTURING ENGINEERS, DEARBORN, MI, US, Bd. 17, Nr. 15, 1. Januar 1998 (1998-01-01), Seiten 338-360, XP004144382, ISSN: 0278-6125

## Beschreibung

Die Erfindung betrifft ein Verfahren zum Optimieren der Zusammensetzung von Biegewerkzeugen einer Biegemaschine sowie ein diesbezügliches System, wie es in den Ansprüchen angegeben ist.

Die EP2039442A1 beschreibt ein Verfahren zum Verwenden eines Werkzeuglayouts einer Biegemaschine, wobei das Verfahren die folgenden Schritte umfasst: Bestimmen eines Biegemaschinen-Werkzeuglayouts; Extrahieren eines Bereichs in dem festgelegten Werkzeuglayout, in dem sich ein Stempel und ein Gesenk als virtuelle Layout-Stufe befinden; und Zuweisen der extrahierten virtuellen Layout-Stufe zu jeder Biegelinie unter Verwendung eines Formmodells eines Blechwerkstücks. Durch die Weiterverwendung eines bestehenden Werkzeuglayouts einer Biegemaschine soll die Rüstzeit bei Adaptionen des Werkzeuglayouts verkürzt werden. Die damit erzielbaren Einsparungen an Rüstzeit sind vor allem bei umfangreich und häufig abzuändernden Werkzeugkonstellationen nur bedingt zufriedenstellend.

Die EP0919300B1 offenbart eine Abkantpresse, die eine leichte Auswahl von Werkzeugen während des Biegens eines Produkts durch Erfassen der Arten und der Anordnung der in der Abkantpresse geladenen Werkzeuge ermöglichen soll. Hierfür ist ein Scanner für das Lesen von Referenzdaten vorgesehen, welche Referenzdaten auf einer Oberfläche von zumindest einem Biegewerkzeug angebracht sind. Der Scanner ist relativ zu dem zumindest einen Biegewerkzeug bewegbar und mittels einer Positionserfassungsvorrichtung können die jeweiligen Positionsdaten der Werkzeuge erfasst werden. Die mit diesen Maßnahmen erzielbaren Erleichterungen in Zusammenhang mit häufig erforderlichen Veränderungen des Layouts der Werkzeuge sind jedoch nur teilweise zufriedenstellend.

Das Dokument "Automated Process Planning for Sheet Metal Bending Operations", S.K. Gupta, et al. beschreibt ein generatives Prozessplanungssystem für Roboter-Blechbiegepressen, das eine verteilte Planungsarchitektur verwendet. Das System besteht aus einem zentralen Betriebsplaner und drei spezialisierten domänenspezifischen Planern je für Werkzeug, Greifen und Bewegen. Es werden verschiedene alternative Teilsequenzen vorgeschlagen und jeder spezialisierte Planer bewertet sie anhand seiner Funktion. Das System ermittelt den Betriebsablauf, die benötigten Werkzeuge und Robotergreifer, das Werkzeuglayout, die Griffpositionen, das Messgerät und die Roboterbewegungspläne für die Herstellung des Teils.

Das Dokument EP1925374A1 offenbart eine Biegevorrichtung zum Biegen eines Werkstücks unter Verwendung eines Stempels, der auf einem oberen Tisch montiert ist, und einer Matrize, die auf einem unteren Tisch montiert ist, durch Betreiben des oberen Tisches oder des unteren Tisches. Die Vorrichtung umfasst ein Bearbeitungsinformationsbestimmungsmittel zum Bestimmen von Biegefolgen, Werkzeuge, Werkzeuglayouts und Arbeitspositionen basierend auf Produktinformationen.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist, den Rüstvorgang von Biegewerkzeugen einer Biegemaschine zu optimieren.

Diese Aufgabe wird durch ein Verfahren und eine Vorrichtung gemäß den Ansprüchen gelöst.

Erfindungsgemäß ist ein Verfahren zum Optimieren der Zusammensetzung von Biegewerkzeugen einer Biegemaschine vorgesehen, wobei die Biegewerkzeuge durch eine Mehrzahl von seriell aufeinanderfolgender Biegestempel und durch eine Mehrzahl von mit den Biegestempeln funktional zusammenwirkender, seriell aufeinanderfolgender Biegegesenke gebildet sind. Demnach ist zumindest eine Biegewerkzeug-Reihe aus Biegestempeln und zumindest eine Biegewerkzeug-Reihe aus Biegegesenken gebildet. Dabei sind die Biegewerkzeuge in Bezug auf die Längsrichtung einer ersten und zweiten Werkzeugaufnahme der Biegemaschine wahlweise positionierbar und an den gewählten Positionen festlegbar, insbesondere festklemmbar. Dadurch ist ein bestimmtes Biegewerkzeug-Layout für die Biegemaschine definiert bzw. definierbar.

Das anspruchsgemäße Verfahren umfasst die Schritte:
- Eingeben von Daten von zumindest einem Biegemodell, das eine Grundlage für ein zu fertigendes, insbesondere umzuformendes Werkstück darstellt, oder Eingeben von mehreren sequentiell auszuführenden Biegeaufträgen eines Biegeauftrags-Stapels in eine Recheneinheit;
- Festlegen oder Vorschlagen, insbesondere Ermitteln, eines ausgewählten Sets von Biegewerkzeugen aus einem verfügbaren Bestand von Biegewerkzeugen durch die Recheneinheit und/oder eine Bedienperson, mit welchem ausgewählten Set von Biegewerkzeugen zumindest eines der Biegemodelle zumindest teilweise umsetzbar ist oder zumindest einzelne der Biegeaufträge des Biegeauftrags-Stapels ausführbar sind;

- Ermitteln einer Wechselhäufigkeitskennzahl, insbesondere einer Biegewerkzeug- Wechselrate, durch die Recheneinheit für zumindest einzelne der Biegewerkzeuge aus dem ausgewählten bzw. benötigten Set von Biegewerkzeugen im Hinblick auf zumindest eines der zu fertigenden Biegemodelle oder im Hinblick auf den zumindest einen abzuarbeitenden Biegeauftrags-Stapel;
- Festlegen oder Vorschlagen von Positionen der einzelnen Biegewerkzeuge des ausgewählten bzw. benötigten Sets von Biegewerkzeugen relativ zu deren Werkzeugaufnahmen durch die Recheneinheit unter Berücksichtigung bzw. Einbeziehung der jeweiligen Wechselhäufigkeitskennzahlen der Biegewerkzeuge;
- Positionieren der Biegewerkzeuge in der Biegemaschine unter Berücksichtigung der Wechselhäufigkeitskennzahlen der Biegewerkzeuge. Demnach erfolgt das Rüsten bzw. das Zuordnen von Rüst-Positionen der benötigten Biegewerkzeuge relativ zu den Werkzeugaufnahmen der Biegemaschine in Abhängigkeit der jeweiligen Wechselhäufigkeitskennzahlen der diversen Biegewerkzeuge.

Unter den benötigten Biegewerkzeugen sind dabei jene Biegewerkzeuge zu verstehen, welche für die Umsetzung von zumindest einem Biegeschritt des Biegemodells bzw. des Biegeauftrags-Stapels erforderlich sind. Unter dem ausgewählten Set von Biegewerkzeugen ist eine Teilmenge von insgesamt zur Verfügung stehenden bzw. von theoretisch benutzbaren Biegewerkzeugen, mit welchen die jeweiligen Biegeaufgaben bzw. Biegeschritte umsetzbar sind, zu verstehen. Durch die rechnergestützte Ermittlung von Wechselhäufigkeitskennzahlen in Bezug auf zumindest einzelne der Biegewerkzeuge kann im Hinblick auf Umrüstungen, welche für die Realisierung des zumindest einen Biege-Werkstücks bzw. für die Abwicklung des Biegeauftrags-Stapels notwendig sind, die benötigte Rüstzeit optimiert und/oder die Anzahl der Biegewerkzeug-Wechselvorgänge reduziert werden. Damit kann die Produktivität der Biegemaschine gesteigert und ein möglichst wirtschaftlicher Betrieb erzielt werden. Darüber hinaus können durch die Minimierung von Werkzeug-Wechselvorgängen allmähliche Verschleißerscheinungen und damit einhergehende Wartungsaufwände an der Biegemaschine bzw. an einer automatisierten Biegewerkzeug-Wechselvorrichtung möglichst gering gehalten werden. Weiters kann durch die rechnergestützte Ermittlung von Wechselhäufigkeitskennzahlen ein Maximierung an Produktivität auch bei relativ komplexen Biegewerkstücken bzw. in Zusammenhang mit umfangreichen Biegeaufträgen mit einer Vielzahl von einzelnen Biegeschritten erzielt werden. Zudem können dadurch fehlerhafte Rüstungen von Biegewerkzeugen weitgehend ausgeschlossen werden, sodass auch in Zusammenhang mit relativ unerfahrenen Bedienpersonen ein möglichst produktiver bzw. planmäßiger Betrieb der Biegemaschine ermöglicht ist.

Ferner kann es zweckmäßig sein, wenn Biegewerkzeuge mit relativ hoher Wechselhäufigkeitskennzahl an einem der beiden Enden oder im Nahbereich zu einem der beiden Enden einer Biegewerkzeug-Reihe positioniert werden. Dadurch werden jene Biegewerkzeuge, welche im Hinblick auf den abzuwickelnden Biegeauftrag bzw. im Hinblick auf das zu fertigende Werkstück relativ häufig zu verschieben sind und/oder durch ein anderes Biegewerkzeug oder durch mehrere andere Biegewerkzeuge zu ersetzen sind, platzgünstig positioniert. Insbesondere kann dadurch ein Umrüstvorgang effizienter und auch fehlersicherer umgesetzt werden. Dies gilt einerseits für manuell auszuführende Biegewerkzeug-Wechselvorgänge, kann aber auch bei automatisiert oder teilautomatisiert ablaufenden Biegewerkzeug-Wechselvorgängen zum Tragen kommen. Dies gilt vor allem dann, wenn dadurch jene Wege, welche mit den Biegewerkzeugen im Zuge eines Rüst- bzw. Tauschvorganges zurückzulegen sind, verkürzt werden können. Aber auch bei manuell auszuführenden Wechselvorgängen kann dadurch das Handling der Biegewerkzeuge, insbesondere der Oberwerkzeuge, aber auch der Unterwerkzeuge, vereinfacht und zugleich sicherer gestaltet werden.

Entsprechend einer praktikablen Maßnahme kann auch vorgesehen sein, dass Biegewerkzeuge mit relativ hoher Wechselhäufigkeitskennzahl an jenem Ende oder in jenem Endbereich einer Biegewerkzeug-Reihe positioniert werden, welches Ende oder welcher Endbereich einer automatisierten Biegewerkzeug-Wechselvorrichtung in oder neben der Biegemaschine nächstliegend zugewandt ist. Dadurch kann die Rüstzeit in Zusammenhang mit automatisierten Biegewerkzeug-Wechselvorrichtungen, welche dazu eingerichtet sind die einzelnen Biegewerkzeuge einer Biegewerkzeug-Reihe ausgehend von einem der beiden Enden der Biegewerkzeuge sequentiell zu verlagern bzw. neu zu organisieren, deutlich verkürzt werden. Insbesondere wird dadurch gewährleistet, dass jene Biegewerkzeuge, welche im Hinblick auf die auszuführenden Biegeaufträge bzw. Biegeschritte relativ häufig zu wechseln sind, insbesondere durch Biegewerkzeuge eines anderen Typs zu ersetzen sind, möglichst rasch zugreifbar sind bzw. in möglichst kurzer Zeit manipulierbar sind. Eine solche Manipulation kann dabei einen automatisierten Transfer zwischen einer Biegewerkzeug-Speichervorrichtung, insbesondere einem Werkzeugmagazin in Regal- oder Karussellausführung, und der jeweiligen Werkzeugaufnahme an der Biegemaschine umfassen.

Darüber hinaus kann vorgesehen sein, dass im Zuge der Ermittlung der Wechselhäufigkeitskennzahlen der einzelnen Biegewerkzeuge von der Recheneinheit zwei oder mehr geometrisch unterschiedliche Biegemodelle, welche für eine Fertigung an der Biegemaschine vorgesehen sind, einbezogen werden. Dadurch kann ein hoher Optimierungsgrad hinsichtlich der erforderlichen Biegewerkzeug-Wechselvorgänge erreicht werden. Durch die rechnergestützte Ermittlung der Wechselhäufigkeitskennzahlen kann diese Ermittlung möglichst rasch, anhand von eindeutigen technischen Systemzusammenhängen, stets objektiv und auch bei komplexen Biegemodellen bzw. bei umfangreichen Biegeauftrags-Stapeln fehlerfrei durchgeführt werden. Die rechnerbasiert ermittelten bzw. vorgeschlagenen Biegewerkzeug-Zusammenstellungen können dabei völlig unabhängig von Erfahrungswerten oder Vorstellungen einer Bedienperson sein, sodass auch laienhafte Bedienpersonen relativ komplexe Biegeoperationen mühelos und schnell umsetzen können.

Vorteilhaft ist auch eine Ausprägung, gemäß welcher vorgesehen sein kann, dass beim Vorliegen von zumindest zwei Biegewerkzeug-Reihen je Werkzeugaufnahme, also bei zwei oder mehr Arbeitsstationen an der Biegemaschine, von der Recheneinheit ein Wechselhäufigkeitsindex je Biegewerkzeug-Reihe ermittelt wird, welcher Wechselhäufigkeitsindex auf den jeweiligen Wechselhäufigkeitskennzahlen von den in den jeweiligen Biegewerkzeug-Reihen vorgesehenen Biegewerkzeugen basiert, wobei eine Biegewerkzeug-Reihe mit einem hohen Wechselhäufigkeitsindex im Vergleich zu einer Biegewerkzeug-Reihe mit einem niedrigeren Wechselhäufigkeitsindex vergleichsweise näher zu einer automatisierten Biegewerkzeug-Wechselvorrichtung positioniert wird. Dadurch wird in vorteilhafter Weise erreicht, dass eine Biegewerkzeug-Reihe, welche vergleichsweise intensiv zu verändern und/oder relativ häufig zu manipulieren ist, derart positioniert ist, dass diese von der automatisierten Biegewerkzeug-Wechselvorrichtung innerhalb relativ kurzer Taktzyklen umstrukturiert oder umgebaut werden kann. Insbesondere sind dadurch Biegewerkzeug-Wechselvorgänge möglichst rasch umsetzbar bzw. sind dadurch bestehende Werkzeugrüstungen mit möglichst geringem Umstrukturierungsaufwand plangemäß veränderbar.

Gemäß einer Weiterbildung des Optimierungsverfahrens ist es möglich, dass Biegewerkzeuge einer Biegewerkzeug-Reihe mit lückenlos aneinandergereihten Biegewerkzeugen, deren in Richtung der Biegewerkzeug-Reihe gemessene Breite im Vergleich zu anderen Biegewerkzeugen dieser Biegewerkzeug-Reihe geringer ist, nicht an den Enden dieser Biegewerkzeug-Reihe positioniert werden. Demzufolge werden Biegewerkzeuge deren Breite im Vergleich zu anderen Biegewerkzeugen einer Biegewerkzeug-Reihe relativ gering ist, vorzugsweise im mittleren Abschnitt einer Biegewerkzeug-Reihe positioniert bzw. zwischen zwei vergleichsweise breiteren Biegewerkzeugen angeordnet. Dadurch kann die Stabilität der Biegewerkzeug-Anordnung erhöht werden bzw. können dadurch die von der Werkzeugaufnahme aufzunehmenden Kräfte gering gehalten werden, insbesondere die auf eine Werkzeugklemmung der Werkzeugaufnahme einwirkenden Belastungen gesenkt werden.

Ferner kann es zweckmäßig sein, wenn an der Biegemaschine zumindest zwei in Längsrichtung ihrer Werkzeugaufnahmen voneinander distanzierte Biegewerkzeug-Reihen gerüstet werden, mit welchen Biegewerkzeug-Reihen zumindest zwei geometrisch unterschiedliche Biegemodelle fertigbar sind oder zumindest zwei separate Biegeschritte des Biegeauftrags-Stapels umsetzbar sind. Unter den Werkzeugaufnahmen der Biegemaschine sind im Allgemeinen deren Biegewerkzeug-Tragelemente bzw. deren Werkzeugklemmungen zu verstehen. Dadurch kann eine hohe Produktivität der Biegemaschine erzielt werden. Die erhöhte Produktivität wird unter anderem durch optimierte Zeitdauern erreicht, welche für Wechsel- oder Adaptierungsvorgänge von Biegewerkzeug-Rüstungen erforderlich sind. Ein erhöhter Optimierungsgrad kann dabei vor allem dann erzielt werden, wenn je Werkzeugaufnahme zwei oder mehr Biegewerkzeug-Reihen ausgeführt sind, welche zu bestimmten Phasen des insgesamt auszuführenden Biegeprozesses verändert bzw. reorganisiert werden müssen.

Darüber hinaus kann zur Optimierung der Biegewerkzeug-Wechselvorgänge vorgesehen sein, dass ein Biegewerkzeug welches einer ersten Biegewerkzeug-Reihe zugehörig ist, und welches Biegewerkzeug in einem nachfolgenden Biegeprozess bzw. Biegeschritt des Biegeauftrags-Stapels als Biegewerkzeug in einer weiteren Biegewerkzeug-Reihe vorgesehen ist, an einem der beiden Enden oder in einem der Endbereiche der ersten Biegewerkzeug-Reihe positioniert wird. Dadurch können Wechselvorgänge beschleunigt bzw. mit möglichst wenigen Verschiebeoperationen bzw. Wechselspielen ausgeführt werden. Insbesondere kann dadurch ein effizienterer Wechsel eines Biegewerkzeuges von einer ersten Arbeitsposition zu einer weiteren Arbeitsposition, welche im Zuge eines späteren oder nachfolgenden Biegeschrittes benötigt wird, erzielt werden.

Die Aufgabe der Erfindung wird weiters durch ein System zum Optimieren der Zusammensetzung von Biegewerkzeugen einer Biegemaschine gelöst. Die Biegewerkzeuge sind dabei durch eine Mehrzahl seriell aufeinanderfolgender Biegestempel und durch eine Mehrzahl von mit den Biegestempeln funktional zusammenwirkender, seriell aufeinanderfolgender Biegegesenke gebildet, wodurch zumindest eine Biegewerkzeug-Reihe aus Biegestempeln und zumindest eine Biegewerkzeug-Reihe aus Biegegesenken gebildet ist. Die Biegewerkzeuge sind dabei in Bezug auf die Längsrichtung einer ersten bzw. zweiten Werkzeugaufnahme der Biegemaschine wahlweise positionierbar und an den gewählten Positionen festlegbar, insbesondere festklemmbar bzw. positionsfest gehaltert. Das entsprechende System umfasst weiters:
- wenigstens ein Eingabemittel zum Eingeben von Daten von zumindest einem Biegemodell, das eine Grundlage für ein zu fertigendes bzw. umzusetzendes Werkstück darstellt, oder von mehreren sequentiell auszuführenden Biegeaufträgen eines Biegeauftrags-Stapels in eine Recheneinheit;
- wobei die Recheneinheit dazu eingerichtet ist, ein ausgewähltes Set von Biegewerkzeugen aus einem verfügbaren Bestand von Biegewerkzeugen autark zu ermitteln oder in Zusammenwirken mit einer Bedienperson festzulegen, mit welchem ausgewählten Set von Biegewerkzeugen zumindest eines der Biegemodelle zumindest teilweise umsetzbar oder zumindest einzelne der Biegeaufträge des Biegeauftrags-Stapels ausführbar sind, also in dem Sinne, dass die Auswahl bzw. Ermittlung des ausgewählten bzw. jeweils erforderlichen Sets von Biegewerkzeugen von der Recheneinheit autark vorgenommen werden kann, oder in Zusammenwirken mit Eingaben einer Bedienperson erfolgen kann;
- und welche Recheneinheit weiters dazu eingerichtet ist, eine Wechselhäufigkeitskennzahl, insbesondere eine Wechselrate für zumindest einzelne der Biegewerkzeuge in dem ausgewählten Set von Biegewerkzeugen im Hinblick auf das zumindest eine zu fertigende Biegemodell oder im Hinblick auf den zumindest einen abzuarbeitenden Biegeauftrags-Stapel zu ermitteln;
- und welche Recheneinheit ferner dazu eingerichtet ist, die Positionen der einzelnen Biegewerkzeuge relativ zu deren Werkzeugaufnahmen unter Berücksichtigung der jeweiligen Wechselhäufigkeitskennzahlen der Biegewerkzeuge festzulegen oder einer Bedienperson des Systems vorzuschlagen; und
- mindestens eine Speichereinheit und/oder Ausgabeeinheit mit welcher Positionen der Biegewerkzeuge relativ zur Biegemaschine unter Berücksichtigung bzw. in Abhängigkeit der Wechselhäufigkeitskennzahlen der Biegewerkzeuge speicherbar und/oder ausgebbar sind.

Demzufolge erfolgt das Rüsten bzw. das Zuordnen von Rüst-Positionen der Biegewerkzeuge relativ zu deren Werkzeugaufnahme bzw. Werkzeugklemmung in der Biegemaschine unter Einflussnahme seitens der prognostischen Wechselhäufigkeit der diversen Biegewerkzeuge. Dadurch kann jene Zeitdauer, welche für das Umorganisieren bzw. Repositionieren von Biegewerkzeugen erforderlich ist, um den oder die nächsten Biegeschritte gemäß dem Biegemodell bzw. gemäß dem Biegeauftrags-Stapel ausführen zu können, optimiert werden. Insbesondere kann die insgesamt erforderliche Durchlaufzeit zur Realisierung eines plangemäßen Biege-Werkstücks bzw. zur Abarbeitung des vorbestimmten Biegeauftrags-Stapels, welcher phasenweise unterschiedliche Biegewerkzeug-Konstellationen erfordert, minimiert werden. Zudem können dadurch die Anforderungen an eine Bedienperson bzw. an eine wenigstens teilautomatisiert betreibbare Biegewerkzeug-Wechselvorrichtung möglichst gering gehalten werden. Die rechnergestützte Ermittlung der Wechselhäufigkeitskennzahlen kann dabei anhand von objektiven technischen Kriterien relativ rasch und zugleich fehlersicher umgesetzt werden.

Des Weiteren kann vorgesehen sein, dass in oder neben der Biegemaschine eine automatisierte Biegewerkzeug-Wechselvorrichtung vorgesehen ist und Biegewerkzeuge mit relativ hoher Wechselhäufigkeitskennzahl an einem der beiden Enden oder im Nahbereich zu einem der beiden Enden einer Biegewerkzeug-Reihe positioniert werden. Dadurch können die für einen Umbau bzw. eine Reorganisation der Biegewerkzeuge erforderlichen Taktzeiten gering gehalten werden. Zudem ist es dadurch ermöglicht, eine Biegewerkzeug-Reihe vergleichsweise unkompliziert zu verlängern bzw. zu verkürzen. Deutlich aufwändiger wäre ein solcher Umbau, wenn das auszutauschende Biegewerkzeug inmitten einer Mehrzahl von aneinander gereihten Biegewerkzeugen lokalisiert wäre und für die Ausführung eines nachfolgenden Biegeschrittes eine neue Gesamtbreite der Biegewerkzeug-Reihe aufzubauen ist. Die neu herzustellende Gesamtbreite könnte dabei eine Verlängerung, aber auch eine Verkürzung der zu verändernden Biegewerkzeug-Reihe bedeuten. Solche Umbauten der Biegewerkzeug-Reihen können vor allem in Zusammenhang mit sogenannten "Schachtelwand-Biegungen" relativ häufig erforderlich sein.

Gemäß einer besonderen Ausprägung ist es möglich, dass in oder neben der Biegemaschine eine automatisierte Biegewerkzeug-Wechselvorrichtung vorgesehen ist und Biegewerkzeuge mit relativ hoher Wechselhäufigkeitskennzahl an jenem Ende oder in jenem Endbereich einer Biegewerkzeug-Reihe positioniert werden, welches Ende oder welcher Endbereich der automatisierten Biegewerkzeug-Wechselvorrichtung nächstliegend zugewandt ist. Dadurch ist es möglich, Biegewerkzeug-Wechselvorgänge zu vereinfachen bzw. die Umrüstzeiten deutlich zu senken, wenn die Biegewerkzeug-Wechselvorrichtung dazu eingerichtet ist, die einzelnen Biegewerkzeuge einer Biegewerkzeug-Reihe einzeln zu manipulieren bzw. zeitlich aufeinanderfolgend zu verschieben. Der quasi serielle Manipulationsvorgang gegenüber den Biegewerkzeugen einer umzurüstenden Biegewerkzeug-Reihe kann dadurch effizienter gestaltet werden.

Entsprechend einer vorteilhaften Weiterbildung kann vorgesehen sein, dass die Werkzeugaufnahmen schienenartige Führungselemente für die Biegewerkzeuge und gesteuert aktivier- und deaktivierbare Klemmelemente für die Biegewerkzeuge umfassen, wobei die Biegewerkzeuge bei deaktivierten Klemmelementen mittels der automatisierten Biegewerkzeug-Wechselvorrichtung hinsichtlich ihrer Positionen automatisiert veränderbar sind. Dadurch ist gewährleistet, dass die Biegewerkzeuge während ihres Verschiebevorganges durch die Führungsschienen gehalten sind und die Gewichtskraft der Biegewerkzeuge von den Führungsschienen aufgenommen wird. Die Verschiebevorrichtungen zur Aufbringung der Verschiebekraft gegenüber den Biegewerkzeugen können dadurch möglichst einfach bzw. leichtgewichtig aufgebaut werden, wodurch in einfacher Art und Weise auch bei hohen Positioniergeschwindigkeiten eine relativ hohe Positioniergenauigkeit erreicht werden kann.

Ferner kann vorgesehen sein, dass die Biegewerkzeuge bei deaktivierten Klemmvorrichtungen in den Führungselementen gleitbeweglich gehaltert sind und mittels wenigstens einer gesteuert aktivier- und deaktivierbaren Verschiebevorrichtung der Biegewerkzeug-Wechselvorrichtung relativ zu den Führungselementen verschiebbar und neu positionierbar sind. Dadurch ist eine automatisierte Biegewerkzeug-Wechselvorrichtung geschaffen, bei welcher sowohl die Biegewerkzeuge als auch die Verschiebevorrichtung mittels den Führungselementen gleitbeweglich geführt sind, insbesondere spurgeführt sind. Die bewegten Massen können somit gering gehalten werden, weil die jeweiligen Gewichtskräfte von den Führungselementen aufgenommen werden. Es sind daher mit relativ einfachen technischen Mitteln hohe Verfahrgeschwindigkeiten bzw. hohe Positioniergenauigkeiten erzielbar.

Darüber hinaus kann vorgesehen sein, dass die Biegewerkzeug-Wechselvorrichtung ein regal- oder karussellartig aufgebautes Speichermagazin für eine Mehrzahl von Biegewerkzeugen unterschiedlicher Type umfasst und wenigstens eine gesteuert aktivier- und deaktivierbare Verschiebevorrichtung für den Transfer von Biegewerkzeugen zwischen den Werkzeugaufnahmen der Biegemaschine und dem Speichermagazin, und vice versa, vorgesehen ist. Dadurch ist es möglich, einen großen Bestand an Biegewerkzeugen unterschiedlicher Type bzw. einen große Anzahl an Biegewerkzeugen gleicher Type verfügbar zu halten und jeweils nur jene Biegewerkzeuge an der Biegemaschine zu rüsten, welche für die Umsetzung der jeweiligen Biegeaufträge bzw. Biegemodelle erforderlich bzw. zweckmäßig sind. Insbesondere kann dadurch ein erhöhter Automatisierungsgrad der Biegemaschine erzielt werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel einer Biegemaschine mit oberen und unteren, jeweils austauschbaren Biegewerkzeugen und einer seitlich an die Biegemaschine angereihten Biegewerkzeugspeicher- und Biegewerkzeug-Wechselvorrichtung;
- Fig. 2: ein Schemabild einer Bestückung einer Biegemaschine mit Biegewerkzeugen in Zusammenhang mit rechnerisch ermittelten Wechselhäufigkeitskennzahlen der einzelnen Biegewerkzeuge und einer automatisierten Biegewerkzeug-Wechselvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

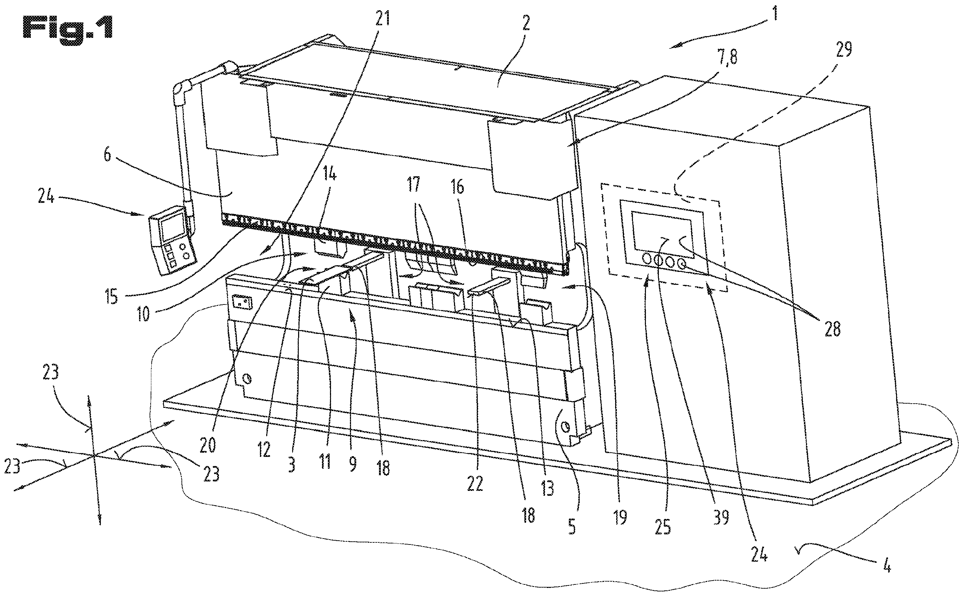

In Fig. 1 ist ein Ausführungsbeispiel einer Biegemaschine 1, insbesondere eine Abkantpresse 2 dargestellt. Diese Abkantpresse 2 ist zum Bearbeiten, insbesondere zum Biegen eines Werkstücks 3 vorgesehen. Die Abkantpresse 2 weist einen senkrecht zu einer Aufstandsfläche 4 ausgerichteten, feststehenden Tischbalken 5 auf. Zur Bearbeitung von Werkstücken 3 umfasst die Biegemaschine 1 bzw. die dargestellte Abkantpresse 2 einen Pressbalken 6, welcher relativ zum Tischbalken 5 in vertikaler Richtung mittels Antriebsmittel 7, beispielsweise Hydraulikzylinder 8, verstellbar bzw. bidirektional verfahrbar ist.

Die Bearbeitung bzw. Umformung eines Werkstücks 3 wird bei der Abkantpresse 2 gemäß dem in der Fig. 1 dargestellten Ausführungsbeispiel mittels wenigstens einem unteren Biegewerkzeug 9 und wenigstens einem oberen Biegewerkzeug 10 bewerkstelligt. Hierbei kann wenigstens ein unteres Biegewerkzeug 9, insbesondere wenigstens ein sogenanntes Biegegesenk 11, in einer unteren Werkzeugaufnahme 12 an einer Längsseite 13 des Tischbalkens 5 angeordnet sein. Wenigstens ein oberes Biegewerkzeug 10, insbesondere wenigstens ein sogenannter Biegestempel 14, kann in einer oberen Werkzeugaufnahme 15 an einer Stirnfläche 16 des Pressbalkens 6 gehaltert sein.

Die Biegewerkzeuge 9, 10 sind an den Werkzeugaufnahmen 12, 15 auswechselbar angeordnet und an individuell wählbaren Längspositionen der Werkzeugaufnahmen 12, 15 gehalten bzw. festlegbar, insbesondere festklemmbar. Somit können die für eine jeweilige Bearbeitung bzw. Umformung eines Werkstücks 3 jeweils am besten geeigneten Biegewerkzeuge 9, 10 gewählt bzw. verwendet werden. Typischerweise sind jeweils mehrere untere Biegewerkzeuge 9 und mehrere obere Biegewerkzeuge 10 im Betrieb der Abkantpresse 2 mittels den Werkzeugaufnahmen 12, 15 gehaltert, um zum Beispiel in aufeinanderfolgenden Umform- bzw. Biegeoperationen an einem Werkstück 3 unterschiedliche Biegevorgänge vornehmen zu können. Aus Gründen der Übersichtlichkeit sind in dem Ausführungsbeispiel gemäß der Fig. 1 jeweils nur einzelne untere Biegewerkzeuge 9 und einzelne obere Biegewerkzeuge 10 schematisiert dargestellt.

Bei der in der Fig. 1 als Ausführungsbeispiel dargestellten Abkantpresse 2, ist des Weiteren zumindest eine automatisiert gesteuerte Anschlagvorrichtung 17 mit zumindest einem Anschlagfinger 18 dargestellt. Bei dem dargestellten Ausführungsbeispiel sind beispielshaft zwei Anschlagvorrichtungen 17 mit je einem Anschlagfinger 18 dargestellt. Es ist aber auch eine Biegemaschine 1 mit nur einem Anschlagfinger 18 bzw. nur einer Anschlagvorrichtung 17 denkbar bzw. sind auch mehr als zwei Anschlagfinger 18 bzw. mehr als zwei Anschlagvorrichtungen 17 möglich.

Die in Fig. 1 dargestellten Anschlagvorrichtungen 17 bzw. Anschlagfinger 18 sind in einem Pressenraum 19 an einer Rückseite des Tischbalkens 5 der als Ausführungsbeispiel dargestellten Biegemaschine 1 bzw. Abkantpresse 2 angeordnet. Der oder die Anschlagfinger 18 können jeweils in eine zum Positionieren eines Werkstücks 3 vorgesehene Anschlagposition 20 verstellt bzw. verfahren werden. Wenn ein Anschlagfinger 18 in eine Anschlagposition 20 verstellt ist, kann sodann ein zu bearbeitendes Werkstück 3 von einer vom Pressenraum 19 wegweisenden Vorderseite bzw. einer Werkstückzufuhrseite 21 an einer Anlegefläche 22 eines Anschlagfingers 18 angelegt, und somit möglichst exakt definiert zwischen den beiden Biegewerkzeugen 9, 10 für dessen anschließende Bearbeitung bzw. Umformung positioniert werden. Die in Fig. 1 beispielhaft dargestellten Anschlagfinger 18 weisen lediglich eine Anlegefläche 22 auf. Grundsätzlich können Ausführungsvarianten von Anschlagfingern 18 auch mehr als eine Anlegefläche 22, sowie zusätzlich Auflageflächen für zu bearbeitende Werkstücke 3, insbesondere für Blechteile, umfassen.

Die in Fig. 1 dargestellten Anschlagvorrichtungen 17 bzw. die Anschlagfinger 18 werden üblicherweise mittels Antriebsanordnungen (in Fig. 1 nicht dargestellt), umfassend zum Beispiel Führungsbahnen, sowie Aktuatoren wie etwa Elektromotoren, insbesondere Servomotoren, automatisiert gesteuert entlang jeweils angetriebener Verstellachsen 23 verstellt bzw. verfahren. Hierbei wird der zumindest eine Anschlagfinger 18 entlang zumindest einer angetriebenen Verfahr- bzw. Verstellachse 23 in eine zum Positionieren bzw. Anlegen eines Werkstücks 3 vorgesehene Anschlagposition 20 verstellt, wie dies anhand des in der Fig. 1 linkerhand dargestellten Anschlagfingers 18 veranschaulicht ist.

Zur Steuerung der Verfahr- bzw. Verstellbewegungen einer Anschlagvorrichtung 17 bzw. eines Anschlagfingers 18 entlang der zumindest einen Verstellachse 23 kann wenigstens eine Steuerungsvorrichtung 24 vorgesehen sein. Wie in Fig. 1 angedeutet ist, kann die Steuerungsvorrichtung 24 mehrere Komponenten aufweisen, beispielsweise mehrere Prozessoren bzw. verteilt angeordnete Rechnerkomponenten, Eingabemittel zur Eingabe von Steuerungsbefehlen, Ausgabemittel zur Anzeige von Informationen, mehrere Sensoren bzw. Positionsgeber zur Erfassung von Systemzuständen, sowie Aktoren zur Beeinflussung von Systemzuständen.

Des Weiteren ist es auch möglich, dass die Steuerungsvorrichtung 24 mit weiteren Steuerungskomponenten verbunden ist, beispielsweise über ein datentechnisches Netzwerk bzw. über das Internet mit mobilen und/oder stationären Ein- und/oder Ausgabemitteln 28 gekoppelt ist. Grundsätzlich kann die Art und Ausgestaltung bzw. die elektronische und datentechnische Architektur der Steuerungsvorrichtung 24 von einem Fachmann beliebig vorgenommen werden. Die Steuerungsvorrichtung 24 kann bevorzugt durch eine CNC-Steuerung gebildet sein, welche die Biegemaschine 1 bzw. die beispielhaft dargestellte Abkantpresse 2 und deren Komponenten, insbesondere deren Antriebsorgane mit Energie und Steuerungssignalen versorgt bzw. beaufschlagt.

Die Steuerungsvorrichtung 24 der Biegemaschine 1 kann auch eine Recheneinheit 25 umfassen bzw. durch eine Recheneinheit 25 gebildet sein. Diese Recheneinheit 25 kann steuerungstechnische und/oder verwaltungs- bzw. datentechnische Aufgaben der Biegemaschine 1 und/oder einer mit der Biegemaschine 1 zusammenwirkenden Biegewerkzeug-Wechselvorrichtung 26 erfüllen. Eine solche Biegewerkzeug-Wechselvorrichtung 26 zum automatisierten oder teilautomatisierten Wechseln von Biegewerkzeugen 9, 10 kann zweckmäßigerweise auch eine Biegewerkzeug-Speichervorrichtung 27 zum Vorrätig halten einer Mehrzahl von bedarfsweise einsetzbaren Biegewerkzeugen 9, 10 unterschiedlicher Type umfassen. Die Biegewerkzeug-Speichervorrichtung 27 kann beispielsweise ein karussell-, regal- oder paternosterartig aufgebaute Speicherstruktur für vorrätig zu haltende Biegewerkzeuge 9, 10 aufweisen.

Die Recheneinheit 25 ist dazu eingerichtet, dass Daten von zumindest einem datentechnischen Biegemodell, das eine Grundlage für ein zu fertigendes Werkstück 3 darstellt, oder Daten von mehreren sequentiell auszuführenden Biegeaufträgen eines Biegeauftrags-Stapels eingebbar sind. Diese Dateneingabe kann anhand von Ein- und/oder Ausgabemitteln 28, beispielsweise mittels eines Bildschirms und eines Bedienfelds erfolgen und/oder durch Zugriff auf eine Speichervorrichtung 29 erfolgen, welche lokal angeordnet sein kann und/oder dezentral vorgesehen sein kann und über eine datentechnische Verbindung mit der Recheneinheit 25 gekoppelt werden kann. Diese Daten können beispielsweise durch wenigstens ein CAD-Modell von dem zumindest einen zu fertigenden Werkstück 3 definiert sein.

Die Recheneinheit 25 ist weiters dazu eingerichtet, ein ausgewähltes Set von Biegewerkzeugen 9, 10 aus einem verfügbaren Bestand von Biegewerkzeugen 9, 10 festzulegen und/oder einer Bedienperson der Biegemaschine 1 vorzuschlagen. Mit diesem ausgewählten Set von Biegewerkzeugen 9, 10 ist zumindest eines der Biegemodelle zumindest teilweise umsetzbar oder sind zumindest einzelne der Biegeaufträge des Biegeauftrags-Stapels ausführbar. Die Auswahl an erforderlichen bzw. zweckmäßigen Biegewerkzeugen 9, 10 kann aber auch alleinig durch die Bedienperson erfolgen und von dieser in die Recheneinheit 25 bzw. in die Steuerungsvorrichtung 24 eingegeben werden. Es kann aber auch vorgesehen sein, dass die Recheneinheit 25 der Bedienperson ein bestimmtes Set an verwendbaren bzw. benötigten Biegewerkzeugen 9, 10 unterbreitet und die Bedienperson diese rechnerseitige Vorauswahl entweder unmittelbar bestätigt, oder aber adaptiert und sodann bestätigt.

Die Recheneinheit 25 ist ferner dazu eingerichtet, eine Wechselhäufigkeitskennzahl 30 für zumindest einzelne der Biegewerkzeuge 9, 10 aus dem ausgewählten Set von Biegewerkzeugen 9, 10 im Hinblick auf zumindest eines der umzusetzenden Biegemodelle oder im Hinblick auf den zumindest einen abzuarbeitenden Biegeauftrags-Stapel zu ermitteln. Insbesondere ist die Recheneinheit 25 dazu ausgelegt zu bestimmen, wie oft bzw. mit welcher Häufigkeit die einzelne Biegewerkzeuge 9, 10 des ausgewählten Sets von Biegewerkzeugen an der Biegemaschine 1 zu wechseln bzw. zu ersetzen sind, um das zumindest eine vorgegebene Biegemodell herstellen zu können bzw. um die Biegeschritte des zumindest einen vorgegebenen Biegeauftrags-Stapels umsetzen zu können. Diese Evaluierung erfolgt dabei unter datentechnischer Berücksichtigung einer Mehrzahl von unmittelbar aufeinanderfolgend auszuführender und/oder zeitlich nahe zusammenhängender Biegeschritte. Die von der Recheneinheit 25 ermittelte Wechselhäufigkeitskennzahl 30 eines Biegewerkzeuges 9, 10 kann auch als Maß für die Verbleibedauer des Biegewerkzeuges 9, 10 in der Werkzeugaufnahme 12, 15 bzw. als Indikator für die Anzahl der mit diesem Biegewerkzeug 9, 10 umsetzbaren Biegeschritte verstanden werden. Die Wechselhäufigkeitskennzahl 30 ist somit ein Maß für die Nutzungsintensität der jeweiligen Biegewerkzeuge 9, 10 bezogen auf zumindest ein bestimmtes, umzusetzendes Biegemodell bzw. bezogen auf zumindest einen bestimmten Biegeauftrags-Stapel mit mehreren sequentiell auszuführenden Biegeschritten gegenüber einem Werkstück 3, insbesondere einem Blechteil. Die von der Recheneinheit 25 ermittelte Wechselhäufigkeitskennzahl 30 eines Biegewerkzeuges 9, 10 kann auch als Maß dafür verstanden werden, wie häufig bzw. intensiv das jeweilige Biegewerkzeug 9, 10 an der Biegemaschine 1 umzurüsten ist, um einen vordefinierten, mehrstufigen Biegeauftrag erfüllen zu können, insbesondere das wenigstens eine Biegemodell bzw. den wenigstens einen Biegeauftrags-Stapel umsetzen zu können.

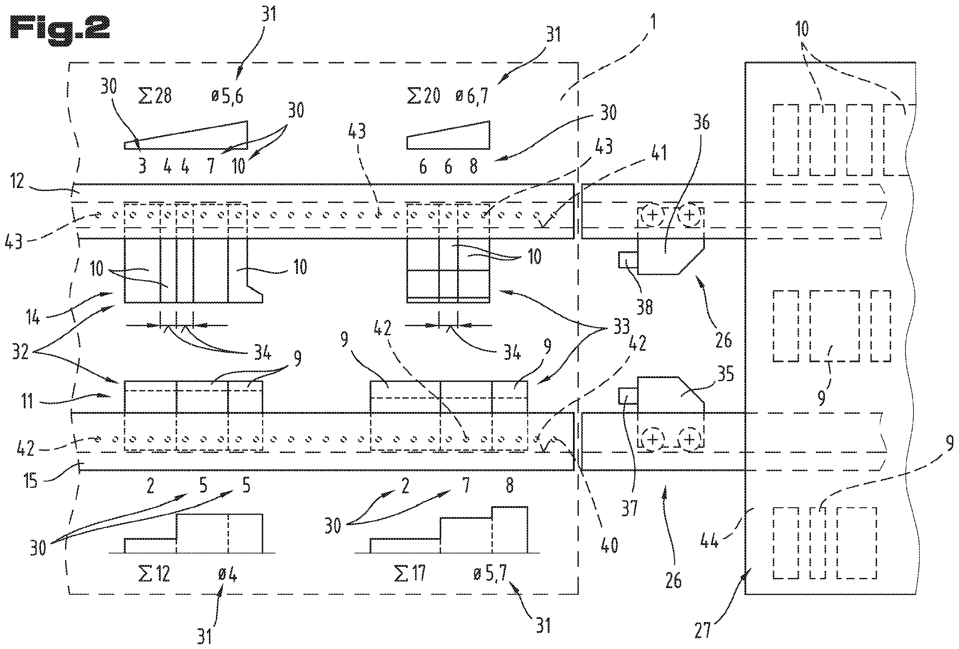

Wie anhand des Ausführungsbeispiels nach Fig. 2 veranschaulicht ist, kann die Wechselhäufigkeitskennzahl 30 durch ein Zahlenwert aus einem Wertebereich, beispielsweise aus dem Bereich von 1 bis 10 repräsentiert sein. Ebenso ist es möglich, die Wechselhäufigkeitskennzahl 30 durch Klassifikationswerte zu repräsentieren, beispielsweise durch die Werte hoch, mittel, oder niedrig zu definieren. Wie in Fig. 2 beispielhaft dargestellt, weisen Biegewerkzeuge 9, 10 mit einer relativ hohen Wechselhäufigkeit eine vergleichsweise hohe Kennzahl auf, während Biegewerkezuge 9, 10 die relativ selten auszutauschen bzw. zu ersetzen sind (und somit eine hohe Nutzungsintensität für die Erfüllung der jeweiligen Biegeaufträge besitzen), eine vergleichsweise niedrige Kennzahl besitzen. Die jeweilige Nutzungsintensität bzw. Wechselhäufigkeitskennzahl 30 kann aber auch durch Tabellenzuordnungen, Intensitätsdiagramme oder Mengensymbole repräsentiert sein.

Zweckmäßig ist es, wenn die Recheneinheit 25 dazu eingerichtet ist, die jeweils ermittelten Wechselhäufigkeitskennzahlen 30 in Bezug auf einen bestimmten Rüstplan von Biegewerkzeugen 9, 10 zumindest temporär in der elektronischen Speichervorrichtung 29 zu speichern und diese Informationen mittels einer Ausgabevorrichtung, insbesondere einem Bildschirm, gegenüber einer Bedienperson zu visualisieren.

Ferner ist die Recheneinheit 25 dazu eingerichtet, unter Berücksichtigung der jeweiligen Wechselhäufigkeitskennzahlen 30 der Biegewerkzeuge 9, 10 die Positionen der einzelnen Biegewerkzeuge 9, 10 des ausgewählten oder benötigten Sets von Biegewerkzeugen relativ zu deren Werkzeugaufnahmen 12, 15 festzulegen oder einer Bedienperson vorzuschlagen. Somit erfolgt die Positionierung der einzelnen Biegewerkzeuge 9, 10 in der Biegemaschine 1 unter Berücksichtigung der Wechselhäufigkeitskennzahlen 30 der einzelnen Biegewerkzeuge 9, 10. Diese Positionierung kann sich dabei auf die Abfolge der einzelnen Biegewerkzeuge 9, 10 bzw. Biegewerkzeug-Reihen und/oder auf die jeweiligen Positionen der Biegewerkzeuge 9, 10 relativ zur Längserstreckung der Werkzeugaufnahmen 12, 15 beziehen. Dadurch kann eine Biegewerkzeug-Anordnung erzielt werden, insbesondere einer sogenannter Rüstplan geschaffen werden, welcher eine möglichst effiziente Bearbeitung des zumindest einen mehrstufig umzusetzenden Biegemodells bzw. des zumindest einen Biegeauftrags-Stapels gewährleistet. Insbesondere kann beim Erfordernis von mehrere Umrüstungen in Bezug auf die zu verwendenden Biegewerkzeug-Sets die jeweils benötigte Zeitdauer für manuell ablaufende oder auch teil- oder vollautomatisiert ablaufende Umrüstvorgänge optimiert bzw. reduziert werden.

Zweckmäßig kann es dabei sein, wenn Biegewerkzeuge 9, 10 mit relativ hoher Wechselhäufigkeitskennzahl 30 an einem der beiden Enden oder im Nahbereich zu einem der beiden Enden einer Biegewerkzeug-Reihe positioniert werden. Ein manuell oder auch automatisiert ablaufender Ersatz des zumindest einen randseitig positionierten, in der Biegemaschine 1 gerüsteten Biegewerkzeuges 9, 10 kann dadurch relativ rasch bzw. fehlerfrei ausgeführt werden.

Vor allem dann, wenn eine seitlich zur Biegemaschine 1 bzw. seitlich zu einem Längsende der Werkzeugaufnahmen 12, 15 positionierte Biegewerkzeug-Speichervorrichtung 27 und/oder Biegewerkzeug-Wechselvorrichtung 26 vorgesehen ist, kann es günstig sein, wenn Biegewerkzeuge 9, 10 mit relativ hoher Wechselhäufigkeitskennzahl 30 an jenem Ende oder in jenem Endbereich einer Biegewerkzeug-Reihe positioniert werden, welches Ende oder welcher Endbereich der automatisierten Biegewerkzeug-Speichervorrichtung 27 und/oder Biegewerkzeug-Wechselvorrichtung 26 nächstliegend zugewandt ist. Die Verfahrwege für auszutauschende, für neu zu positionierende oder für zu entfernende Biegewerkzeuge 9, 10 können dadurch möglichst gering gehalten werden. Von besonderem Vorteil ist in diesem Zusammenhang der möglichst gering gehaltene Umstrukturierungsaufwand von Biegewerkzeug-Reihen in Verbindung mit einer Biegewerkzeug-Wechselvorrichtung 26 welche die einzelnen Biegewerkzeuge 9, 10 ausgehend von einem Längsende einer Biegewerkzeug-Reihe manipuliert, insbesondere sequentiell in den Werkzeugaufnahmen 12, 15 umpositioniert bzw. verschiebt, wie dies in Fig. 2 schematisiert veranschaulicht ist.

Um den Zeitaufwand für Reorganisationen des Biegewerkzeug-Layouts weiter zu reduzieren, kann auch vorgesehen sein, dass bei der rechnerischen bzw. modellbasierten Ermittlung der Wechselhäufigkeitskennzahlen 30 der einzelnen Biegewerkzeuge 9, 10 von der Recheneinheit 25 zwei oder mehr geometrisch unterschiedliche Biegemodelle, welche für eine Fertigung an der Biegemaschine 1 vorgesehen sind, einbezogen werden.

Es kann auch vorgesehen sein, dass beim Vorliegen von zumindest zwei Biegewerkzeug-Reihen 32, 33 je Werkzeugaufnahme 12, 15 von der Recheneinheit 25 ein Wechselhäufigkeitsindex 31 je Biegewerkzeug-Reihe 32, 33 ermittelt wird. Dieser Wechselhäufigkeitsindex 31 basiert auf den jeweiligen Wechselhäufigkeitskennzahlen 30 von den in den jeweiligen Biegewerkzeug-Reihen 32, 33 vorgesehenen Biegewerkzeugen 9, 10. Zweckmäßig ist es dabei, wenn eine Biegewerkzeug-Reihe 33 mit einem hohen Wechselhäufigkeitsindex 31 im Vergleich zu einer Biegewerkzeug-Reihe 32 mit einem niedrigeren Wechselhäufigkeitsindex 31 vergleichsweise näher zu einer automatisierten Biegewerkzeug-Wechselvorrichtung 26 bzw. Biegewerkzeug-Speichervorrichtung 27 positioniert wird.

Im Zuge der rechnerischen Ermittlung von Vorschlägen für die Arbeitspositionen bzw. im Zuge der rechnerischen Festlegung von Arbeitspositionen durch die Recheneinheit 25 kann auch vorgesehen sein, dass Biegewerkzeuge 9, 10 innerhalb einer Biegewerkzeug-Reihe 32, 33 mit lückenlos aneinandergereihten Biegewerkzeugen 9, 10, deren in Richtung der Biegewerkzeug-Reihe 32, 33 gemessene Breite 34 im Vergleich zu anderen Biegewerkzeugen 9, 10 dieser Biegewerkzeug-Reihe 32, 33 geringer ist, nicht an den Enden dieser Biegewerkzeug-Reihe 32, 33 positioniert werden. Dadurch können Tendenzen zur Verkippung von relativ schmalen Biegewerkzeugen 9, 10 hintan gehalten werden bzw. ist es dadurch möglich, die auf die Werkzeugaufnahmen 12, 15 einwirkenden Belastungen gering zu halten.

Entsprechend einer praktikablen Maßnahme können an der Biegemaschine 1 zumindest zwei in Längsrichtung ihrer Werkzeugaufnahmen 12, 15 voneinander distanzierte Biegewerkzeug-Reihen 32, 33 gerüstet werden, mit welchen Biegewerkzeug-Reihen 32, 33 zumindest zwei geometrisch unterschiedliche Biegemodelle fertigbar sind oder zumindest zwei separate Biegeschritte des Biegeauftrags-Stapels umsetzbar sind. Dadurch werden an einer einzelnen Biegemaschine 1 mehrere Arbeitspositionen für Biegeoperationen geschaffen, wodurch die Effizienz der Werkstückbearbeitung gesteigert werden kann.

Entsprechend einer zweckmäßigen Maßnahme kann auch vorgesehen sein, dass ein Biegewerkzeug 9, 10 welches einer ersten Biegewerkzeug-Reihe 32 zugehörig ist, und welches Biegewerkzeug 9, 10 in einem nachfolgenden Biegeschritt des Biegeauftrags-Stapels als Biegewerkzeug 9, 10 in einer weiteren Biegewerkzeug-Reihe 33 vorgesehen ist, an einem der beiden Enden der ersten Biegewerkzeug-Reihe 32 positioniert wird. Auch dadurch können der Umrüstungsaufwand und die damit einhergehende Zeitdauer für die Rekonfiguration des Biegewerkzeug-Layouts optimiert werden. Dies ist insbesondere in Verbindung mit einer Biegewerkzeug-Wechselvorrichtung 26 zweckmäßig, mit welcher die Biegewerkzeuge 9, 10 seriell bzw. einzeln innerhalb der Werkzeugaufnahmen 12, 15 verschoben werden und/oder unter Einsatz einer Zwischenspeicherposition oder der Biegewerkzeug-Speichervorrichtung 27 ausgetauscht bzw. hinsichtlich ihrer Arbeitspositionen in den Biegewerkzeug-Reihen 32, 33 vertauscht oder repositioniert werden müssen, um die jeweiligen Biegeschritte des Biegemodells bzw. Biegeauftrags-Stapels ordnungsgemäß ausführen zu können.

Entsprechend einer zweckmäßigen Ausführungsform kann eine solche Biegewerkzeug-Wechselvorrichtung 26 wenigstens ein schienengeführtes Biegewerkzeug-Transfermittel 35, 36 umfassen. Mittels dem wenigstens einen Biegewerkzeug-Transfermittel 35, 36 sind die Biegewerkzeuge 9, 10 manipulierbar, insbesondere zwischen den Werkzeugaufnahmen 12, 15 der Biegemaschine 1 und der Biegewerkzeug-Speichervorrichtung 27 - und vice versa - transferierbar.

Dabei kann auch vorgesehen sein, dass das wenigstens eine Biegewerkzeug-Transfermittel 35, 36 via die Werkzeugaufnahmen 12, 15 der Biegemaschine 1 linearverstellbar geführt ist, wie dies in Fig. 2 schematisch angedeutet ist. Zur gesteuerten Kopplung und Entkopplung zwischen dem Biegewerkzeug-Transfermittel 35, 36 und zumindest einem der Biegewerkzeuge 9, 10 kann wenigstens ein vorzugsweise elektromagnetisch wirksames Kopplungsmittel 37, 38 an dem wenigstens einen Biegewerkzeug-Transfermittel 35, 36 vorgesehen sein.

In den Fig. 1 und 2 sind einzelne Bestandteile des erfindungsgemäßen Systems und darüber hinausgehende Komponenten zum Optimieren der Zusammensetzung von Biegewerkzeugen 9, 10 veranschaulicht. Wesentlich ist, dass die Recheneinheit 25 dazu eingerichtet ist, eine Wechselhäufigkeitskennzahl 30 für zumindest einzelne der Biegewerkzeuge 9, 10 in einem ausgewählten Set von Biegewerkzeugen 9, 10 im Hinblick auf das zumindest eine zu fertigende Biegemodell oder im Hinblick auf den zumindest einen abzuarbeitenden Biegeauftrags-Stapel zu ermitteln. Die Recheneinheit 25 ist ferner dazu eingerichtet, die Positionen der einzelnen Biegewerkzeuge 9, 10 relativ zu deren Werkzeugaufnahmen 12, 15 unter Berücksichtigung der jeweiligen Wechselhäufigkeitskennzahlen 30 der Biegewerkzeuge 9, 10 festzulegen oder einer Bedienperson des Systems vorzuschlagen. Dabei ist mindestens eine Speichereinheit 29 und/oder Ausgabeeinheit 39 vorgesehen, mit welcher Positionen der Biegewerkzeuge 9, 10 relativ zur Biegemaschine 1 unter Berücksichtigung der Wechselhäufigkeitskennzahlen 30 der einzelnen Biegewerkzeuge 9, 10 speicherbar und/oder ausgebbar sind.

Die Recheneinheit 25 ist typischerweise softwaregesteuert ausgeführt und umfasst programmtechnische Mittel zur Umsetzung der beschriebenen Steuerungs- bzw. Verfahrensabläufe. Die angegebenen, erfindungsgemäßen Verfahrensmaßnahmen können demnach computerimplementiert umgesetzt sein.

Wenn wie aus den Fig. 1, 2 beispielhaft ersichtlich ist, in oder neben der Biegemaschine 1 eine automatisierte Biegewerkzeug-Wechselvorrichtung 26 bzw. Biegewerkzeug-Speichervorrichtung 27 vorgesehen ist, ist es zweckmäßig, wenn die Recheneinheit 25 jene Biegewerkzeuge 9, 10, welche im Hinblick auf die einzelnen Biegeschritte zur Umsetzung des Biegemodells bzw. Biegeauftrags-Stapels eine relativ hohe Wechselhäufigkeitskennzahl 30 aufweisen, an einem der beiden Enden oder im Nahbereich zu einem der beiden Enden einer Biegewerkzeug-Reihe 32, 33 positioniert werden.

Insbesondere kann in oder neben der Biegemaschine 1 eine automatisierte Biegewerkzeug-Wechselvorrichtung 26 vorgesehen sein, wobei Biegewerkzeuge 9, 10 mit relativ hoher Wechselhäufigkeitskennzahl 30 an jenem Ende oder in jenem Endbereich einer Biegewerkzeug-Reihe 32, 33 positioniert werden, welches Ende oder welcher Endbereich der automatisierten Biegewerkzeug-Wechselvorrichtung 26 nächstliegend zugewandt ist.

Zweckmäßig kann es sein, wenn die Werkzeugaufnahmen 12, 15 schienenartige Führungselemente 40, 41 für die Biegewerkzeuge 9, 10 und gesteuert aktivier- und deaktivierbare Klemmelemente 42, 43 für die Biegewerkzeuge 9, 10 umfassen, wobei die Biegewerkzeuge 9, 10 bei deaktivierten Klemmelementen 42, 43 mittels der automatisierten Biegewerkzeug-Wechselvorrichtung 25, insbesondere mittels dem wenigstens einen Biegewerkzeug-Transfermittel 35, 36 hinsichtlich ihrer Positionen automatisiert veränderbar sind.

Insbesondere kann vorgesehen sein, dass die Biegewerkzeuge 9, 10 bei deaktivierten Klemmelementen 42, 43 in den Führungselementen 40, 41 gleitbeweglich gehaltert sind und mittels dem wenigstens einen gesteuert aktivier- und deaktivierbaren Biegewerkzeug-Transfermittel 35, 36 der Biegewerkzeug-Wechselvorrichtung 26 relativ zu den Führungselementen 40, 41 verschiebbar und neu positionierbar sind.

Die Biegewerkzeug-Wechselvorrichtung 26 kann ein regal- oder karussellartig aufgebautes Speichermagazin 44 für eine Mehrzahl von Biegewerkzeugen 9, 10 unterschiedlicher Type umfassen, wobei wenigstens eine gesteuert aktivier- und deaktivierbares Biegewerkzeug-Transfermittel 35, 36 für den Transfer von ausgewählten Biegewerkzeugen 9, 10 zwischen den Werkzeugaufnahmen 12, 15 der Biegemaschine 1 und dem Speichermagazin 44, und vice versa, vorgesehen ist.

Die in der Biegewerkzeug-Speichervorrichtung 27 bzw. im Speichermagazin 44 für eine bedarfsweise Verwendung vorrätig gehaltenen oberen und unteren Biegewerkzeuge 9, 10 können dabei durch Werkzeuge mit verschiedenen Breiten 34 und Höhen, durch gerade verlaufende Werkzeuge, durch gekröpfte Werkzeuge, durch Werkzeuge mit verschiedenen Gesenkweiten, durch sogenannte Hornwerkzeuge, durch Falzwerkzeuge, durch Werkzeuge mit Sonderformen, und dergleichen Werkzeuge definiert sein.

Der Schutzbereich ist durch die Ansprüche bestimmt.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Biegemaschine | 29 | Speichervorrichtung |
| 2 | Abkantpresse | 30 | Wechselhäufigkeitskennzahl |
| 3 | Werkstück | 31 | Wechselhäufigkeitsindex |
| 4 | Aufstandsfläche | 32 | Biegewerkzeug-Reihe |
| 5 | Tischbalken | 33 | Biegewerkzeug-Reihe |
| 6 | Pressbalken | 34 | Breite |
| 7 | Antriebsmittel | 35 | Biegewerkzeug-Transfermittel |
| 8 | Hydraulikzylinder | 36 | Biegewerkzeug-Transfermittel |
| 9 | Biegewerkzeug (unteres) | 37 | Kopplungsmittel |
| 10 | Biegewerkzeug (oberes) | 38 | Kopplungsmittel |
| 11 | Biegegesenk | 39 | Ausgabeeinheit |
| 12 | Werkzeugaufnahme (untere) | 40 | Führungselement |
| 13 | Längsseite | 41 | Führungselement |
| 14 | Biegestempel | 42 | Klemmelement |
| 15 | Werkzeugaufnahme (obere) | 43 | Klemmelement |
| 16 | Stirnfläche | 44 | Speichermagazin |
| 17 | Anschlagvorrichtung | | |
| 18 | Anschlagfinger | | |
| 19 | Pressenraum | | |
| 20 | Anschlagposition | | |
| 21 | Werkstückzufuhrseite | | |
| 22 | Anlegefläche | | |
| 23 | Verstellachsen | | |
| 24 | Steuerungsvorrichtung | | |
| 25 | Recheneinheit | | |
| 26 | Biegewerkzeug-Wechselvorrichtung | | |
| 27 | Biegewerkzeug-Speichervorrichtung | | |
| 28 | Ein- und/oder Ausgabemittel | | |

## Patentansprüche

1. Verfahren zum Optimieren der Zusammensetzung von Biegewerkzeugen (9, 10) einer Biegemaschine (1), welche Biegewerkzeuge (9, 10) durch eine Mehrzahl seriell aufeinanderfolgender Biegestempel (14) und durch eine Mehrzahl von mit den Biegestempeln (14) funktional zusammenwirkender, seriell aufeinanderfolgender Biegegesenke (11) gebildet sind, wodurch zumindest eine Biegewerkzeug-Reihe (32) aus Biegestempeln (14) und zumindest eine Biegewerkzeug-Reihe (32) aus Biegegesenken (11) gebildet ist,
wobei die Biegewerkzeuge (9, 10) in Bezug auf die Längsrichtung einer ersten und zweiten Werkzeugaufnahme (12, 15) der Biegemaschine (1) wahlweise positionierbar und an den gewählten Positionen festlegbar sind,
das Verfahren umfassend die Schritte:
- Eingeben von Daten von zumindest einem Biegemodell, das eine Grundlage für ein zu fertigendes Werkstück (3) darstellt, oder von mehreren sequentiell auszuführenden Biegeaufträgen eines Biegeauftrags-Stapels in eine Recheneinheit (25);
- Festlegen oder Vorschlagen eines ausgewählten Sets von Biegewerkzeugen (9, 10) aus einem verfügbaren Bestand von Biegewerkzeugen (9, 10) durch die Recheneinheit (25) und/oder eine Bedienperson, mit welchem ausgewählten Set von Biegewerkzeugen (9, 10) zumindest eines der Biegemodelle zumindest teilweise umsetzbar ist oder zumindest einzelne der Biegeaufträge des Biegeauftrags-Stapels ausführbar sind; **gekennzeichnet durch**
- Ermitteln einer Wechselhäufigkeitskennzahl (30) durch die Recheneinheit (25) für zumindest einzelne der Biegewerkzeuge (9, 10) aus dem ausgewählten Set von Biegewerkzeugen (9, 10) im Hinblick auf zumindest eines der umzusetzenden Biegemodelle oder im Hinblick auf den zumindest einen abzuarbeitenden Biegeauftrags-Stapel; durch
- Festlegen oder Vorschlagen von Positionen der einzelnen Biegewerkzeuge (9, 10) des ausgewählten oder benötigten Sets von Biegewerkzeugen (9, 10) relativ zu deren Werkzeugaufnahmen (12, 15) durch die Recheneinheit (25) unter Berücksichtigung der jeweiligen Wechselhäufigkeitskennzahlen (30) der Biegewerkzeuge (9, 10); und durch
- Positionieren der Biegewerkzeuge (9, 10) in der Biegemaschine (1) unter Berücksichtigung der Wechselhäufigkeitskennzahlen (30) der Biegewerkzeuge (9, 10).

2. Verfahren nach Anspruch 1, wobei Biegewerkzeuge (9, 10) mit relativ hoher Wechselhäufigkeitskennzahl (30) an einem der beiden Enden oder im Nahbereich zu einem der beiden Enden einer Biegewerkzeug-Reihe (32, 33) positioniert werden.

3. Verfahren nach Anspruch 1 oder 2, wobei Biegewerkzeuge (9, 10) mit relativ hoher Wechselhäufigkeitskennzahl (30) an jenem Ende oder in jenem Endbereich einer Biegewerkzeug-Reihe (32, 33) positioniert werden, welches Ende oder welcher Endbereich einer automatisierten Biegewerkzeug-Wechselvorrichtung (26) oder Biegewerkzeug-Speichervorrichtung (27) in oder neben der Biegemaschine (1) nächstliegend zugewandt ist.

4. Verfahren nach einem der vorhergehenden Ansprüche, wobei im Zuge der Ermittlung der Wechselhäufigkeitskennzahlen (30) der einzelnen Biegewerkzeuge (9, 10) von der Recheneinheit (25) zwei oder mehr geometrisch unterschiedliche Biegemodelle, welche für eine Fertigung an der Biegemaschine (1) vorgesehen sind, einbezogen werden.

5. Verfahren nach einem der vorhergehenden Ansprüche, wobei beim Vorliegen von zumindest zwei Biegewerkzeug-Reihen (32, 33) je Werkzeugaufnahme (12, 15) von der Recheneinheit (25) ein Wechselhäufigkeitsindex (31) je Biegewerkzeug-Reihe (32, 33) ermittelt wird, welcher Wechselhäufigkeitsindex (31) auf den jeweiligen Wechselhäufigkeitskennzahlen (30) von den in den jeweiligen Biegewerkzeug-Reihen (32, 33) vorgesehenen Biegewerkzeugen (9, 10) basiert, wobei eine Biegewerkzeug-Reihe (33) mit einem hohen Wechselhäufigkeitsindex (31) im Vergleich zu einer Biegewerkzeug-Reihe (32) mit einem niedrigeren Wechselhäufigkeitsindex (31) vergleichsweise näher zu einer automatisierten Biegewerkzeug-Wechselvorrichtung (26) oder Biegewerkzeug-Speichervorrichtung (27) positioniert wird.

6. Verfahren nach einem der vorhergehenden Ansprüche, wobei Biegewerkzeuge (9, 10) einer Biegewerkzeug-Reihe (32, 33) mit lückenlos aneinandergereihten Biegewerkzeugen (9, 10), deren in Richtung der Biegewerkzeug-Reihe (32, 33) gemessene Breite (34) im Vergleich zu anderen Biegewerkzeugen (9, 10) dieser Biegewerkzeug-Reihe (32, 33) geringer ist, nicht an den Enden dieser Biegewerkzeug-Reihe (32, 33) positioniert werden.

7. Verfahren nach einem der vorhergehenden Ansprüche, wobei an der Biegemaschine (1) zumindest zwei in Längsrichtung ihrer Werkzeugaufnahmen (12, 15) voneinander distanzierte Biegewerkzeug-Reihen (32, 33) gerüstet werden, mit welchen Biegewerkzeug-Reihen (32, 33) zumindest zwei geometrisch unterschiedliche Biegemodelle fertigbar sind oder zumindest zwei separate Biegeschritte des Biegeauftrags-Stapels umsetzbar sind.

8. Verfahren nach einem der vorhergehenden Ansprüche, wobei ein Biegewerkzeug (9, 10) welches einer ersten Biegewerkzeug-Reihe (32) zugehörig ist, und welches Biegewerkzeug (9, 10) in einem nachfolgenden Biegeschritt des Biegeauftrags-Stapels als Biegewerkzeug (9, 10) in einer weiteren Biegewerkzeug-Reihe (33) vorgesehen ist, an einem der beiden Enden oder in einem der Endbereiche der ersten Biegewerkzeug-Reihe (32) positioniert wird.

9. System zum Optimieren der Zusammensetzung von Biegewerkzeugen (9, 10) einer Biegemaschine (1), welche Biegewerkzeuge (9, 10) durch eine Mehrzahl seriell aufeinanderfolgender Biegestempel (14) und durch eine Mehrzahl von mit den Biegestempeln (14) funktional zusammenwirkender, seriell aufeinanderfolgender Biegegesenke (11) gebildet sind, wodurch zumindest eine Biegewerkzeug-Reihe (32, 33) aus Biegestempeln (14) und zumindest eine Biegewerkzeug-Reihe (32, 33) aus Biegegesenken (11) gebildet ist,
wobei die Biegewerkzeuge (9, 10) in Bezug auf die Längsrichtung einer ersten und zweiten Werkzeugaufnahme (12, 15) der Biegemaschine wahlweise positionierbar und an den gewählten Positionen festlegbar sind, das System weiters umfassend:
- wenigstens ein Eingabemittel (28) zum Eingeben von Daten von zumindest einem Biegemodell, das eine Grundlage für ein zu fertigendes Werkstück (3) darstellt, oder von mehreren sequentiell auszuführenden Biegeaufträgen eines Biegeauftrags-Stapels in eine Recheneinheit (25);
- wobei die Recheneinheit (25) dazu eingerichtet ist, ein ausgewähltes Set von Biegewerkzeugen (9, 10) aus einem verfügbaren Bestand von Biegewerkzeugen (9, 10) autark zu ermitteln oder in Zusammenwirken mit einer Bedienperson festzulegen, mit welchem ausgewählten Set von Biegewerkzeugen (9, 10) zumindest eines der Biegemodelle zumindest teilweise umsetzbar oder zumindest einzelne der Biegeaufträge des Biegeauftrags-Stapels ausführbar sind;
**dadurch gekennzeichnet, dass**
- die Recheneinheit (25) weiters dazu eingerichtet ist, eine Wechselhäufigkeitskennzahl (30) für zumindest einzelne der Biegewerkzeuge (9, 10) in dem ausgewählten Set von Biegewerkzeugen (9, 10) im Hinblick auf das zumindest eine zu fertigende Biegemodell oder im Hinblick auf den zumindest einen abzuarbeitenden Biegeauftrags-Stapel zu ermitteln; und dass
- die Recheneinheit (25) ferner dazu eingerichtet ist, die Positionen der einzelnen Biegewerkzeuge (9, 10) relativ zu deren Werkzeugaufnahmen (12, 15) unter Berücksichtigung der jeweiligen Wechselhäufigkeitskennzahlen (30) der Biegewerkzeuge (9, 10) festzulegen oder einer Bedienperson des Systems vorzuschlagen; und dass
- mindestens eine Speichereinheit (29) und/oder mindestens ein Ausgabemittel (28) mit welcher Positionen der Biegewerkzeuge (9, 10) relativ zur Biegemaschine (1) unter Berücksichtigung der Wechselhäufigkeitskennzahlen (30) der Biegewerkzeuge (9, 10) speicherbar und/oder ausgebbar sind.

10. System nach Anspruch 9, wobei in oder neben der Biegemaschine (1) eine automatisierte Biegewerkzeug-Wechselvorrichtung (26) oder Biegewerkzeug-Speichervorrichtung (27) vorgesehen ist und Biegewerkzeuge (9, 10) mit relativ hoher Wechselhäufigkeitskennzahl (30) an einem der beiden Enden oder im Nahbereich zu einem der beiden Enden einer Biegewerkzeug-Reihe (32, 33) positioniert werden.

11. System nach Anspruch 9, wobei in oder neben der Biegemaschine (1) eine automatisierte Biegewerkzeug-Wechselvorrichtung (26) oder Biegewerkzeug-Speichervorrichtung (27) vorgesehen ist und Biegewerkzeuge (9, 10) mit relativ hoher Wechselhäufigkeitskennzahl (30) an jenem Ende oder in jenem Endbereich einer Biegewerkzeug-Reihe (32, 33) positioniert werden, welches Ende oder welcher Endbereich der automatisierten Biegewerkzeug-Wechselvorrichtung (26) oder Biegewerkzeug-Speichervorrichtung (27) nächstliegend zugewandt ist.

12. System nach einem der Ansprüche 9 bis 11, wobei die Werkzeugaufnahmen (12, 15) schienenartige Führungselemente (40, 41) für die Biegewerkzeuge (9, 10) und gesteuert aktivier- und deaktivierbare Klemmelemente (42, 43) für die Biegewerkzeuge (9, 10) umfassen, wobei die Biegewerkzeuge (9, 10) bei deaktivierten Klemmelementen (42, 43) mittels der automatisierten Biegewerkzeug-Wechselvorrichtung (26) hinsichtlich ihrer Positionen automatisiert veränderbar sind.

13. System nach Anspruch 12, wobei die Biegewerkzeuge (9, 10) bei deaktivierten Klemmelementen (42, 43) in den Führungselementen (40, 41) gleitbeweglich gehaltert sind und mittels wenigstens einem gesteuert aktivier- und deaktivierbaren Biegewerkzeug-Transfermittel (35, 36) der Biegewerkzeug-Wechselvorrichtung (26) relativ zu den Führungselementen (40, 41) verschiebbar und neu positionierbar sind.

14. System nach einem der Ansprüche 9 bis 13, wobei die Biegewerkzeug-Wechselvorrichtung (26) ein regal- oder karussellartig aufgebautes Speichermagazin (44) für eine Mehrzahl von Biegewerkzeugen (9, 10) unterschiedlicher Type umfasst und wenigstens eine gesteuert aktivier- und deaktivierbares Biegewerkzeug-Transfermittel (35, 36) für den Transfer von Biegewerkzeugen (9, 10) zwischen den Werkzeugaufnahmen (12, 15) der Biegemaschine (1) und dem Speichermagazin (44), und vice versa, vorgesehen ist.

## Claims

1. A method for optimizing the assembly of bending tools (9, 10) of a bending machine (1), which bending tools (9, 10) are formed by a plurality of serially successive bending punches (14) and by a plurality of serially successive bending dies (11) functionally cooperating with the bending punches (14), whereby at least one bending tool line (32) of bending punches (14) and at least one bending tool line (32) of bending dies (11) is formed,
wherein the bending tools (9, 10) can be optionally positioned regarding the longitudinal direction of a first and second tool holder (12, 15) of the bending machine (1) and can be fixed at the selected positions,
the method comprising the steps of:
- entering data of at least one bending model, which is a basis for a workpiece (3) to be produced, or of multiple bending orders of a bending order stack to be carried out sequentially, into a computing unit (25);
- determining or suggesting, by the computing unit (25) and/or an operator, a selected set of bending tools (9, 10) from an available inventory of bending tools (9, 10), with which selected set of bending tools (9, 10) at least one of the bending models can be at least partially realized or at least individual ones of the bending orders of the bending order stack can be carried out, **characterized by**
- determining a change frequency number (30) by means of the computing unit (25) for at least individual ones of the bending tools (9, 10) from the selected set of bending tools (9, 10) regarding at least one of the bending models to be realized or regarding the at least one bending order stack to be processed; by
- determining or suggesting, by the computing unit (25), positions of the individual bending tools (9, 10) of the selected or required set of bending tools (9, 10) relative to their tool holders (12, 15), taking into account the respective change frequency numbers (30) of the bending tools (9, 10); and by
- positioning the bending tools (9, 10) in the bending machine (1) taking into account the change frequency numbers (30) of the bending tools (9, 10).

2. The method according to claim 1, wherein bending tools (9, 10) with a relatively high change frequency number (30) are positioned at one of the two ends or in the vicinity of one of the two ends of a bending tool line (32, 33).

3. The method according to claim 1 or 2, wherein bending tools (9, 10) with a relatively high change frequency number (30) are positioned at that end or in that end region of a bending tool line (32, 33), which end or which end region most closely faces an automated bending tool changing device (26) or bending tool storage device (27) in or next to the bending machine (1).

4. The method according to one of the preceding claims, wherein during the identification of the change frequency numbers (30) of the individual bending tools (9, 10), two or more geometrically different bending models, which are provided at the bending machine (1) for a production, are included by the computing unit (25).

5. The method according to one of the preceding claims, wherein in case of at least two bending tool lines (32, 33) being present per tool holder (12, 15), the computing unit (25) determines a change frequency index (31) per bending tool line (32, 33), which change frequency index (31) is based on the respective change frequency numbers (30) of the bending tools (9, 10) provided in the respective bending tool lines (32, 33), wherein a bending tool line (33) with a high change frequency index (31) is positioned comparatively closer to an automated bending tool changing device (26) or bending tool storage device (27) as compared to a bending tool line (32) with a low change frequency index (31).

6. The method according to one of the preceding claims, wherein bending tools (9, 10) of a bending tool line (32, 33) with bending tools (9, 10) lined up without any gaps, the width (34) of which, measured in the direction of the bending tool line (32, 33) is smaller compared to other bending tools (9, 10) of this bending tool line (32, 33), are not positioned at the ends of this bending tool line (32, 33).

7. The method according to one of the preceding claims, wherein at least two bending tool lines (32, 33) distanced from one another in the longitudinal direction of their tool holders (12, 15) are equipped on the bending machine (1), with which bending tool lines (32, 33) at least two geometrically different bending models can be produced or at least two separate bending steps of the bending order stack can be realized.

8. The method according to one of the preceding claims, wherein a bending tool (9, 10), which belongs to a first bending tool line (32) and which bending tool (9, 10) is provided as a bending tool (9, 10) in a further bending tool line (33) in a subsequent bending step of the bending order stack, is positioned at one of the two ends or in one of the end regions of the first bending tool line (32).

9. A system for optimizing the assembly of bending tools (9, 10) of a bending machine (1), which bending tools (9, 10) are formed by a plurality of serially successive bending punches (14) and by a plurality of serially successive bending dies (11) functionally cooperating with the bending punches (14), whereby at least one bending tool line (32, 33) of bending punches (14) and at least one bending tool line (32, 33) of bending dies (11) is formed,
wherein the bending tools (9, 10) can be optionally positioned regarding the longitudinal direction of a first and second tool holder (12, 15) of the bending machine (1) and can be fixed at the selected positions, the system further comprising:
- at least one entering means (28) for entering data of at least one bending model, which is a basis for a workpiece (3) to be produced, or of multiple bending orders of a bending order stack to be carried out sequentially, into a computing unit (25);
- wherein the computing unit (25) is configured to autarkically identify a selected set of bending tools (9, 10) from an available inventory of bending tools (9, 10), or to determine, together with an operator, with which selected set of bending tools (9, 10) at least one of the bending models can be at least partially realized or at least individual ones of the bending orders of the bending order stack can be carried out, **characterized in that**
- the computing unit (25) is further configured to determine a change frequency number (30) for at least individual ones of the bending tools (9, 10) in a selected set of bending tools (9, 10) regarding the at least one bending model to be produced or regarding the at least one bending order stack to be processed; and that
- the computing unit (25) is furthermore configured to determine the positions of the individual bending tools (9, 10) relative to their tool holders (12, 15), taking into account the respective change frequency numbers (30) of the bending tools (9, 10), or to suggest them to an operator of the system; and
- at least one storage unit (29) and/or at least one output means (28), with which positions of the bending tools (9, 10) relative to the bending machine (1) can be stored and/or output, taking into account the change frequency numbers (30) of the bending tools (9, 10).

10. The system according to claim 9, wherein an automated bending tool changing device (26) or bending tool storage device (27) is provided in or next to the bending machine (1), and bending tools (9, 10) with a relatively high change frequency number (30) are positioned at one of the two ends or in the vicinity of one of the two ends of a bending tool line (32, 33).

11. The system according to claim 9, wherein an automated bending tool changing device (26) or bending tool storage device (27) is provided in or next to the bending machine (1), and bending tools (9, 10) with a relatively high change frequency number (30) are positioned at that end or in that end region of a bending tool line (32, 33), which end or which end region most closely faces an automated bending tool changing device (26) or bending tool storage device (27).

12. The system according to one of claims 9 to 11, wherein the tool holders (12, 15) comprise rail-like guide elements (40, 41) for the bending tools (9, 10) and clamping elements (42, 43), which can be activated and deactivated in a controlled manner, for the bending tools (9, 10), wherein the bending tools (9, 10), when the clamping elements (42, 43) are deactivated, are automatedly changeable regarding their positions by means of the automated bending tool changing device (26).

13. The system according to claim 12, wherein the bending tools (9, 10), when the clamping elements (42, 43) are deactivated, are slidably held in the guide elements (40, 41) and are displaceable and repositionable relative to the guide elements (40, 41) by means of at least one controlledly activatable and deactivatable bending tool transfer means (35, 36) of the bending tool changing device (26).

14. The system according to one of claims 9 to 13, wherein the bending tool changing device (26) comprises a storage depot (44) with a shelf-like or carrousel-like structure for a plurality of bending tools (9, 10) of different types, and at least one controlledly activatable and deactivatable bending tool transfer means (35, 36) is provided for transferring bending tools (9, 10) between the tool holders (12, 15) of the bending machine (1) and the storage depot (44) and vice versa.

## Revendications

1. Procédé d'optimisation de la composition d'outils de pliage (9, 10) d'une machine de pliage (1), ces outils de pliage (9, 10) étant constitués d'une pluralité de poinçons de pliage (14) se succédant en série et d'une pluralité de matrices de pliage (11) se succédant en série, en interaction avec les poinçons de pliage (14), au moins une rangée d'outils de pliage (32) étant donc constituée de poinçons de pliage (14) et au moins une rangée d'outils de pliage (32) étant constituée de matrices de pliage (11),
dans lequel les outils de pliage (9, 10) peuvent être positionnés par rapport à la direction longitudinale d'un premier et d'un deuxième porte-outils (12, 15) de la machine de pliage (1) et fixés aux positions choisies,
ce procédé comprenant les étapes suivantes :
- entrée de données à partir d'au moins un modèle de pliage, qui constitue une base pour une pièce à fabriquer (3), ou de plusieurs tâches de pliage à exécuter de manière séquentielle d'un ensemble de tâches dans une unité de calcul (25) ;
- détermination ou proposition d'un ensemble sélectionné d'outils de pliage (9, 10) parmi un stock disponible d'outils de pliage (9, 10) par l'unité de calcul (25) et/ou un opérateur, au moins un des modèles de pliage pouvant être réalisé au moins partiellement ou au moins certaines des tâches de pliage de l'ensemble de tâches pouvant être exécutées avec cet ensemble sélectionné d'outils de pliage (9, 10) ;
**caractérisé par**
- la détermination d'un indice de fréquence de changement (30) par l'unité de calcul (25) pour au moins certains des outils de pliage (9, 10) parmi l'ensemble sélectionné d'outils de pliage (9, 10) en ce qui concerne au moins un des modèles de pliage à réaliser ou en ce qui concerne l'au moins un ensemble de tâches de pliage à effectuer ; par
- la détermination ou la proposition de positions des différents outils de pliage (9, 10) de l'ensemble sélectionné ou requis d'outils de pliage (9, 10) par rapport à leurs porte-outils (12, 15) par l'unité de calcul (25) en tenant compte des indices de fréquence de changement (30) des outils de pliage (9, 10) et par
- le positionnement des outils de pliage (9, 10) dans la machine de pliage (1) en tenant compte des indices de fréquence de changement (30) des outils de pliage (9, 10).

2. Procédé selon la revendication 1, dans lequel les outils de pliage (9, 10) avec un indice de fréquence de changement (30) relativement élevé sont positionnés au niveau d'une des deux extrémités ou à proximité d'une des deux extrémités d'une rangée d'outils de pliage (32, 33).

3. Procédé selon la revendication 1 ou 2, dans lequel les outils de pliage (9, 10) avec un indice de fréquence de changement (30) relativement élevé sont positionnés au niveau de l'extrémité ou dans la partie d'extrémité d'une rangée d'outils de pliage (32, 33) dont l'extrémité ou la partie d'extrémité est la plus proche d'un dispositif de changement d'outil de pliage automatisé (26) ou d'un dispositif de stockage d'outils de pliage (27), dans ou à proximité de la machine de pliage (1).

4. Procédé selon l'une des revendications précédentes, dans lequel, au cours de la détermination des indices de fréquence de changement (30) des différents outils de pliage (9, 10) par l'unité de calcul (25), deux modèles de pliage différents ou plus, qui sont prévus pour une fabrication sur la machine de pliage (1), sont pris en compte.

5. Procédé selon l'une des revendications précédentes, dans lequel, s'il existe au moins deux rangées d'outils de pliage (32, 33) par porte-outil (12, 15), un indice de fréquence de changement (31) est déterminé par l'unité de calcul (25) pour chaque rangée d'outils de pliage (32, 33), cet indice de fréquence de changement (31) étant basé sur les indices de fréquence de changement (30) des outils de pliage (9, 10) prévus dans les rangées d'outils de pliage (32, 33) respectives, dans lequel une rangée d'outils de pliage (33) avec un indice de fréquence de changement (31) élevé est positionnée, par rapport à une rangée d'outils de pliage (32) avec un indice de fréquence de changement (31) plus faible, plus près d'un dispositif de changement d'outils de pliage automatisé (26) ou d'un dispositif de stockage d'outils de pliage (27).

6. Procédé selon l'une des revendications précédentes, dans lequel les outils de pliage (9, 10) d'une rangée d'outils de pliage (32, 33), avec des outils de pliage (9, 10) juxtaposés sans interruption, dont la largeur (34) mesurée dans la direction de la rangée d'outils de pliage (32, 33) est plus faible que d'autres outils de pliage (9, 10) de cette rangée d'outils de pliage (32, 33), ne sont pas positionnés aux extrémités de cette rangée d'outils de pliage (32, 33).

7. Procédé selon l'une des revendications précédentes, dans lequel, sur la machine de pliage (1) sont prévues au moins deux rangées d'outils de pliage (32, 33) distantes entre elles dans la direction longitudinale de leurs porte-outils (12, 15), au moins deux modèles de pliage géométriquement différents pouvant être fabriqués ou au moins deux étapes de pliage distinctes de l'ensemble de tâches de pliage pouvant être exécutées avec ces rangées d'outils de pliage (32, 33).

8. Procédé selon l'une des revendications précédentes, dans lequel un outil de pliage (9, 10) qui appartient à une première rangée d'outils de pliage (32) et cet outil de pliage (9, 10) étant prévu dans une étape de pliage suivante de l'ensemble de tâches de pliage en tant qu'outil de pliage (9, 10) dans une autre rangée d'outils de pliage (33), est positionné aux deux extrémités ou dans une des parties d'extrémité de la première rangée d'outils de pliage (32).

9. Système d'optimisation de la composition d'outils de pliage (9, 10) d'une machine de pliage (1), ces outils de pliage (9, 10) étant constitués d'une pluralité de poinçons de pliage (14) se succédant en série et d'une pluralité de matrices de pliage (11) se succédant en série, en interaction avec les poinçons de pliage (14), au moins une rangée d'outils de pliage (32, 33) étant donc constituée de poinçons de pliage (14) et au moins une rangée d'outils de pliage (32, 33) étant constituée de matrices de pliage (11), dans lequel les outils de pliage (9, 10) peuvent être positionnés par rapport à la direction longitudinale d'un premier et d'un deuxième porte-outils (12, 15) de la machine de pliage et fixés aux positions choisies, ce système comprenant en outre :
- au moins un moyen d'entrée (28) pour l'entrée de données à partir d'au moins un modèle de pliage, qui constitue une base pour une pièce à fabriquer (3), ou de plusieurs tâches de pliage à exécuter de manière séquentielle d'un ensemble de tâches dans une unité de calcul (25) ;
- dans lequel l'unité de calcul (25) est conçue pour déterminer de manière autonome un ensemble sélectionné d'outils de pliage (9, 10) parmi un stock disponible d'outils de pliage (9, 10) ou pour déterminer, en interaction avec un opérateur, avec quel ensemble sélectionné d'outils de pliage (9, 10) au moins un des modèles de pliage peut être réalisé au moins partiellement ou au moins certaines des tâches de pliage de l'ensemble de tâches de pliage peuvent être exécutées ;
**caractérisé en ce que**
- l'unité de calcul (25) est en outre conçue pour déterminer, pour au moins certains des outils de pliage (9, 10) parmi l'ensemble sélectionné d'outils de pliage (9, 10), un indice de fréquence de changement (30), en ce qui concerne au moins un des modèles de pliage à réaliser ou en ce qui concerne l'au moins un ensemble de tâches de pliage à effectuer ; et **en ce que**
- l'unité de calcul (25) est en outre conçue pour déterminer les positions des différents outils de pliage (9, 10) par rapport à leurs porte-outils (12, 15) en tenant compte des indices de fréquence de changement (30) respectifs des outils de pliage (9, 10) et **en ce que**
- au moins une unité d'enregistrement (29) et/ou au moins un moyen de sortie (28), avec lesquels les positions des outils de pliage (9, 10) par rapport à la machine de pliage (1) peuvent être enregistrées et/ou sorties, en tenant compte des indices de fréquence de changement (30) des outils de pliage (9, 10).

10. Système selon la revendication 9, dans lequel, dans ou à proximité de la machine de pliage (1), est prévu un dispositif de changement d'outil de pliage automatisé (26) ou un dispositif de stockage d'outils de pliage (27) et les outils de pliage (9, 10) avec un indice de fréquence de changement (30) relativement élevé sont positionnés au niveau des deux extrémités ou à proximité d'une des deux extrémités d'une rangée d'outils de pliage (32, 33).

11. Système selon la revendication 9, dans lequel, dans ou à proximité de la machine de pliage (1), est prévu un dispositif de changement d'outil de pliage automatisé (26) ou un dispositif de stockage d'outils de pliage (27) et les outils de pliage (9, 10) avec un indice de fréquence de changement (30) relativement élevé sont positionnés au niveau de l'extrémité ou dans la partie d'extrémité d'une rangée d'outils de pliage (32, 33) dont l'extrémité ou la partie d'extrémité est la plus proche du dispositif de changement d'outil de pliage automatisé (26) ou du dispositif de stockage d'outils de pliage (27).

12. Système selon l'une des revendications 9 à 11, dans lequel les porte-outils (12, 15) comprennent des éléments de guidage en forme de rails (40, 41) pour les outils de pliage (9, 10) et des éléments de serrage activables et désactivables (42, 43) pour les outils de pliage (9, 10), dans lequel les positions des outils de pliage (9, 10) peuvent être modifiées de manière automatisée au moyen du dispositif de changement d'outil de pliage automatisé (26) lorsque les éléments de serrage (42, 43) sont désactivés.

13. Système selon la revendication 12, dans lequel, lorsque les éléments de serrage (42, 43) sont désactivés, les outils de pliage (9, 10) sont maintenus de manière coulissante dans les éléments de guidage (40, 41) et peuvent être coulissés et repositionnés par rapport aux éléments de guidage (40, 41) à l'aide d'au moins un moyen de transfert d'outil de pliage (26) activable et désactivable (35, 36).

14. Système selon l'une des revendications 9 à 13, dans lequel le dispositif de changement d'outil de pliage (26) comprend un magasin de stockage (44) sous forme de rayonnage ou de carrousel, pour une pluralité d'outils de pliage (9, 10) de différentes sortes et au moins un moyen de transfert d'outil de pliage activable et désactivable (35, 36) est prévu pour le transfert d'outils de pliage (9, 10) entre les porte-outils (12, 15) de la machine de pliage (1) et le magasin de stockage (44) et vice-versa.
